# EUROPEAN PATENT SPECIFICATION

(11) **EP 2 804 560 B1**
(45) Date of publication and mention of the grant of the patent: **26.10.2016**
(21) Application number: 13710062.4
(22) Date of filing: 16.01.2013
(51) Int. Cl.: A61C 8/00

(54) **BIOCOMPATIBLE MATERIAL BARS APT TO PREVENT THE INTERDENTAL BONE PEAK RESORPTION FOLLOWING DENTAL PROCEDURES AND / OR PERIODONTAL DISEASES**
STANGEN AUS BIOKOMPATIBLEM MATERIAL ZUR VERHINDERUNG DER INTERDENTALEN KNOCHENSPITZENRESORPTION NACH ZAHNÄRZTLICHEN VERFAHREN UND/ODER PARODONTALERKRANKUNGEN
BARRES EN MATÉRIAU COMPOSITE EMPÊCHANT LA RÉSORPTION DE LA CRÊTE OSSEUSE INTERDENTAIRE APRÈS UNE CHIRURGIE DENTAIRE ET/OU DES MALADIES PARODONTALES

(30) Priority: 18.01.2012 IT RM20120015
(43) Date of publication of application: 26.11.2014
(73) Proprietor: Castelnuovo, Jacopo, 00197 Roma (IT)
(72) Inventor: Castelnuovo, Jacopo, 00197 Roma (IT)
(74) Representative: Di Giovine, Paolo
(86) International application number: PCT/IT2013/000013
(87) International publication number: WO 2013/121451

(56) References cited:
- WO-A1-2011/059738
- WO-A2-01/41753
- DE-A1-102005 013 200
- US-A1- 2009 061 386
- US-A1- 2010 090 332
- US-A1- 2010 248 185
- US-B1- 6 213 774

## Description

### Prior art

The aesthetically pleasant appearance of a natural set of teeth or of a set of teeth reconstructed with dental prosthesis is due also to the harmony existing between the gingival component (soft tissues or gingiva) and the dental component (teeth).

The relationship between these two components in an oral health condition, which then corresponds to the aesthetically most captivating condition, provides for the presence of gingival extensions or prolongations between teeth.

Interdental extensions, also referred to as interdental papillae, give a scalloped appearance to the gingival component.

Normally, in conditions of periodontal health, i.e. health of the tooth supporting tissues -gingiva, bone and periodontal ligament - the interdental papillae's tip extents up to the contact point between adjacent teeth, thus completely closing the interdental space. The lack of interdental papillae in a smile is often a sign of a pathological condition, such as an inflammation of soft and hard tissues or of the alveolar bone, and it causes the appearance of black triangles between teeth.

Besides defacing the smile from an aesthetic point of view, black interdental triangles cause several inconveniences to the patient, such as:
- Stagnation of food residues and dental plaque at interdental spaces
- Altered speech due to air passage through open interdental spaces
- Passage of saliva through interdental spaces during phonation.

The gingiva and interdental papillae do not have a shape of their own, but they assume the shape and configuration of the underlying bone which they cover.

Therefore, for a gingiva's scalloped appearance to be present, i.e. presence of interdental papillae, it is necessary for the underlying bone to have a scalloped appearance as well, in other words it needs to have interdental bone peaks.

When in pathological situations such as periodontal disease or periodontitis, or following iatrogenic procedures such as periodontal surgery, the bone resorbs, loses its scalloping, flattens and shrinks, also the gingiva flattens and shrinks, thus losing its interdental scalloping and therefore its papillae.

The flattening and shrinkage of the gingiva, and the loss of its scalloping, causes teeth to appear longer than usual, dental roots to be exposed, and black interdental triangles to appear.

Interdental papillae height determinants are mainly two:
- Lateral compression exerted on the gingiva by two teeth adjacent to the papilla
- Bone peaks below interdental papillae.

Between the two height determinants , the underlying bone plays an essential role, so it is important to try to prevent the iatrogenic resorption of interdental bone peaks which may occur following dental procedures such as:
- Dental extraction
- Replacement of missing teeth by inserting (single or multiple) dental implants
- Periodontal surgery

Currently, there are no clinical and scientific effective and repeatable techniques for preserving interdental bone peaks and therefore the papillae, although particular emphasis is given to this topic in both scientific publications and oral communications presented at national and international conferences.

Instead, devices for the reconstruction of bone peaks, and therefore of papillae, previously resorbed, i.e. lost, have been described.

Particularly, the patent US 2010/0248185 (D1) owned by Ricardo Hermellino LEITE and deposited on Sept 30^{th} 2010 describes a "dental pin", characterized by a head external to the bone which is anchored by a body inserted into the bone. The head replaces the previously resorbed bone peak and functions as a support to gingival soft tissues so as to form a new papilla.

The patent WO 2011/059738 A1 (D2) owned by Darnell KAIGLER and deposited on May 19^{th} 2011 describes an "embodiment" or implant, also characterized by a body with the function of anchorage inside the bone and by a head external to the bone with acting as an artificial bone peak on which the previously lost papilla must rest and regrow.

The patent US 2009/0061386 A1 owned by Tetsuya NISHIDA deposited on March 5^{th} 2009 describes an "implanter" or implant, characterized by an intraosseous part or body with a function of anchorage for a projection external to the alveolar bone which reproduces a previously destroyed bone peak.

The patent US 6,213,774 B1 owned by Sargon Lazarof deposited on April 10^{th} 2001 describes an implant for dental papillae, characterized by a shaft to be inserted into the bone connected to a head external to the bone for supporting the previously destroyed papilla.

Therefore, all aforementioned patents call for the positioning of prostheses replacing bone peaks (papilla dental implant; implanter; dental pin;) which are all similar to one another and characterized by having a part external to the bone (head) and an intraosseous part (body) necessary only to anchor the head. Such devices are not used to prevent interdental bone peak resorption but only for the restoration or recovery of the interdental bone crest previously destroyed. Therefore, they do not have a function of prevention, but rather of recovery or replacement, and thus they represent a type of a late or delayed therapy, in the form of a prosthesis which, according to the definition, is "...an artificial apparatus used to replace a missing part of the body, such as a limb, an eye, a heart valve..." or, as in this case, an interdental papilla.

All aforementioned devices have been designed to be inserted only into the point where the bone crest is already flattened and the bone peaks have already undergone a resorption process and therefore must be reconstructed (restoration), but such devices cannot be used where the original (natural) bone peaks are still intact.

In fact, despite being capable of having sections of different shape and dimensions, the external heads, which represent the core of their inventive concept, must remain outside the bone to reconstruct the resorbed bone peak, and they cannot be pushed into the peaks because of their shape and dimensions.

Instead, as regards to preservation of papillae and therefore to prevention of their resorption, surgical techniques for preservation or regeneration of papillae have been suggested over time such as the "papilla preservation flap" technique, wherein the papilla is not subject to incision first, and to dissection then, during surgery; or the meticulous preservation of bone peaks by means of procedures that are as atraumatic as possible such as, for example, dental extractions performed through luxation exerted only on palatal or lingual area without affecting or touching interdental bone peaks and papillae with the lever; yet others suggest not to involve papillae, when possible, during clinical procedures so as not to create undesired resorptions, or to rotate portions of the gingival flap in an interproximal direction so as to recreate flattened papillae after surgical procedures concerning the insertion of intraosseous implants (Palacci).

None of these suggestions and none of these techniques allow to achieve appreciable, repeatable, stable and durable results.

The replacement of a missing tooth by an titanium dental implant, i.e. an artificial root which replaces the root of an extracted natural tooth, is a successful technique which is made possible by the high compatibility of pure titanium and alloys thereof with the bone tissue.

Once it has been surgically inserted, the implant and the bone establish an indirect and strong contact through titanium oxides over the months.

This process, referred to as "osseointegration", gives stability to the implant which can be reconstructed with an artificial prosthesis (crown or capsule).

The use of dental implants made out of titanium or alloys thereof has highlighted that such application not only allows to insert new artificial teeth anchored to the bone, but also prevents a further bone resorption over time where the implant has been inserted.

According to the present invention, starting from this feature of titanium and alloys thereof, "bars" have been designed which, once inserted into the interdental bone thickness, prevent the bone peak resorption.

### Description of the invention

The object of the present invention is to provide "bars" of biocompatible material having a size, a shape and surfaces which make them suitable to be inserted into the interdental bone peaks.

Said bars of biocompatible material are inserted into the interdental bone thickness according to a technique which will be herein described.

According to the present invention, bars of biocompatible material are fabricated having such a size to fit the interdental bone dimensions, and therefore these bars are thin in thickness and likewise small-sized in length and width.

Bars may have different shapes which make them suitable to be inserted into the interdental bone, thus matching its shape and size, and they may have surface treatments which favor their implantation and osseointegration.

The method for surgically inserting bars of biocompatible material into the interdental bone thickness provides that this insertion occurs before, or in some cases at the same time of, performing dental procedures, thus forming a site in the interdental bone into which the bar is implanted or inserted.

After implantation, the bar can be covered with a filler material (such as bone, hydroxyapatite, etc.) and by a resorbable membrane.

### Description of the drawings

Fig. 1 shows a bar with a square cross section
Fig. 2 shows a bar with an oval cross section
Fig. 3 shows a bar with a rectangular cross section
Fig. 4 shows a bar with a bilobate cross section
Fig. 5 shows a bar with an hourglass-shaped cross section
Fig. 6 shows a bar with a lenticular cross section
Fig. 7 shows a bar with a round cross section
Fig. 8 shows a rectangular bar with a solid body
Fig. 9 shows a rectangular bar with a hollow body
Fig. 10 shows an hourglass-shaped bar with two holes at the ends
Fig. 11 shows a lenticular bar
Fig. 12 shows a rectangular bar with serrated sides or profiles
Fig. 13 shows a rectangular bar with a series of holes on the surface
Fig. 14 shows a rectangular bar with a series of oval openings on the surface
Fig. 15 shows a bar with an hourglass-shaped profile
Fig. 16 shows a lenticular bar with a series of holes on the surface
Fig. 17 shows a situation of bars' insertion before a tooth extraction
Fig. 17a shows a situation of interdental papillae after a certain period of time following the bars' insertion and after the tooth extraction.
Fig. 17b shows a situation of interdental papillae with bars after seating an artificial tooth (crown) on an intraosseous implant.

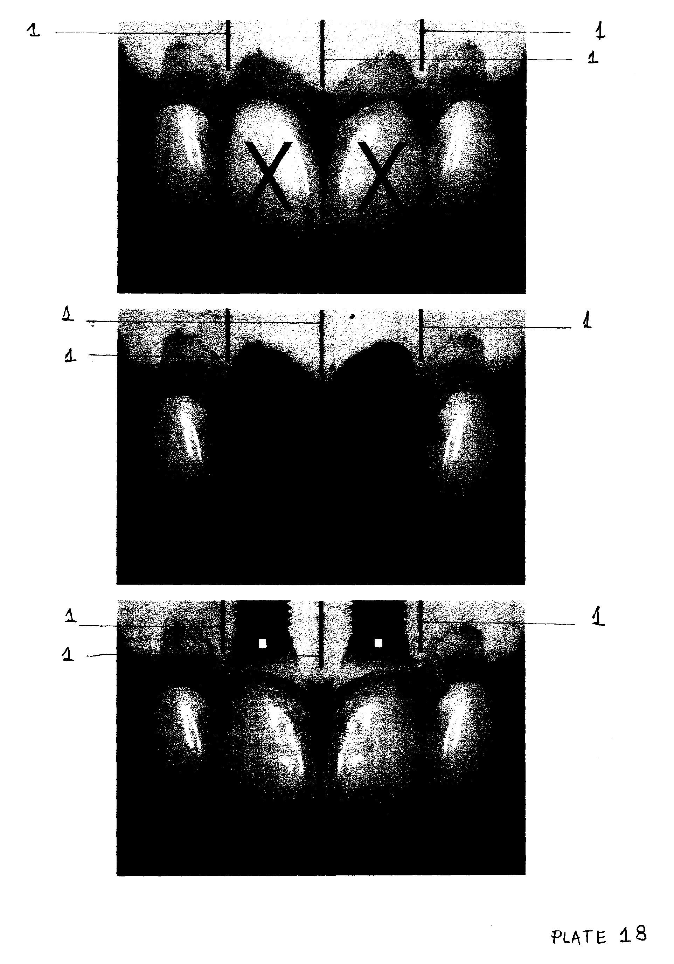

Fig. 18 shows the sequence of figures 17 to 17b in the situation where two artificial teeth (crowns) are seated on two adjacent dental implants.

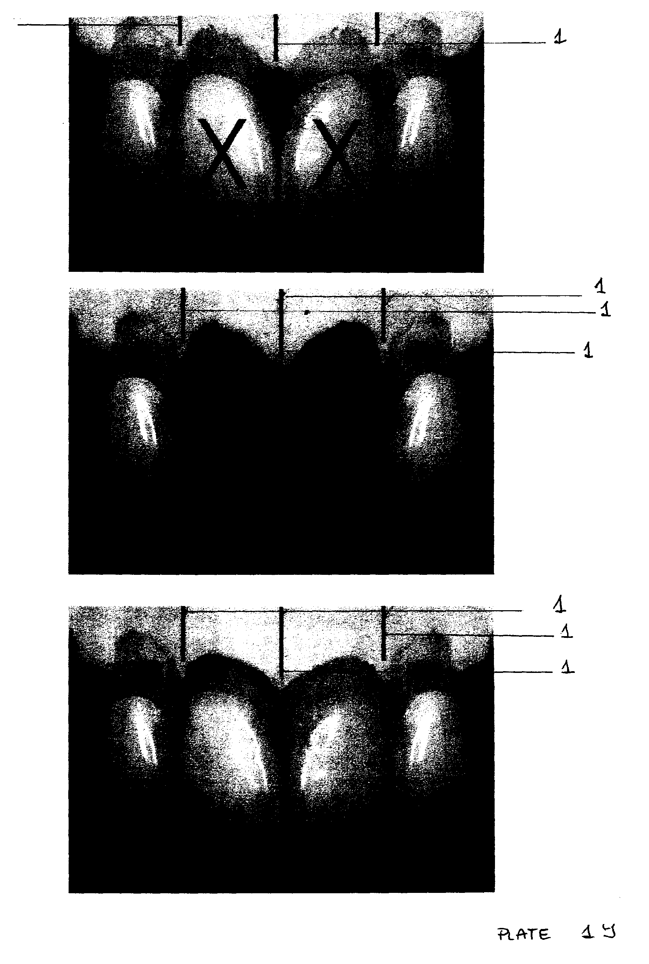

Fig. 19 shows the sequence of figures 17 to 17b in the situation where two artificial teeth are inserted as bridge intermediary elements (pontics) between two natural teeth functioning as abutments or pillars.

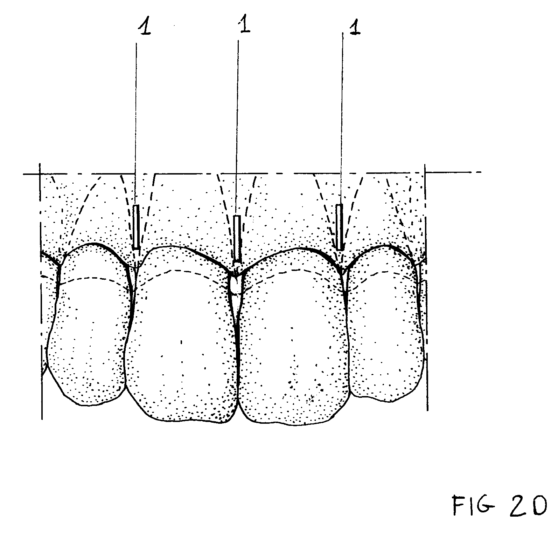

Fig. 20 shows an exemplary view of biocompatible material bars of the present invention implanted into interdental bone peaks.

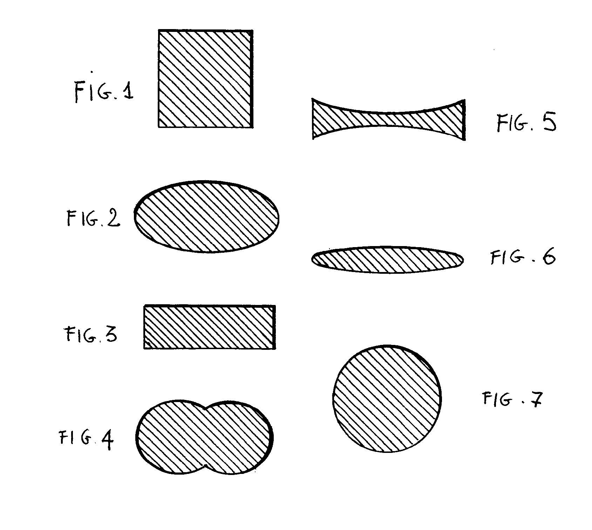

The bars illustrated in Figures 2, 4, 5, 6, 7, 10, 11, 15 and 16 do not represent embodiments of the present invention.

### Description of a preferred embiment

An essential element of the present invention is the presence of a biocompatible material bar (1).

The biocompatible material bar is made out of titanium or alloys thereof.

The surface of the biocompatible material bar may be smooth or, if necessary, treated in various manners and with various techniques so as to stimulate and/or promote the osseointegration process and increase the surface contacting the bone.

Surface treatments of the biocompatible material bar have been tested with good results such as but not only:
Acid etching of the surface
Plasma sprayed surfaces
hydroxyapatite (HA) coatings
sandblasting of the surface
roughening of the surface.

All these surface treatments are specific of and referable to several manufacturers of dental implants and they are all applied for the same purposes, i.e. increasing the contact surface between bone and implant, and promoting the osseointegration process.

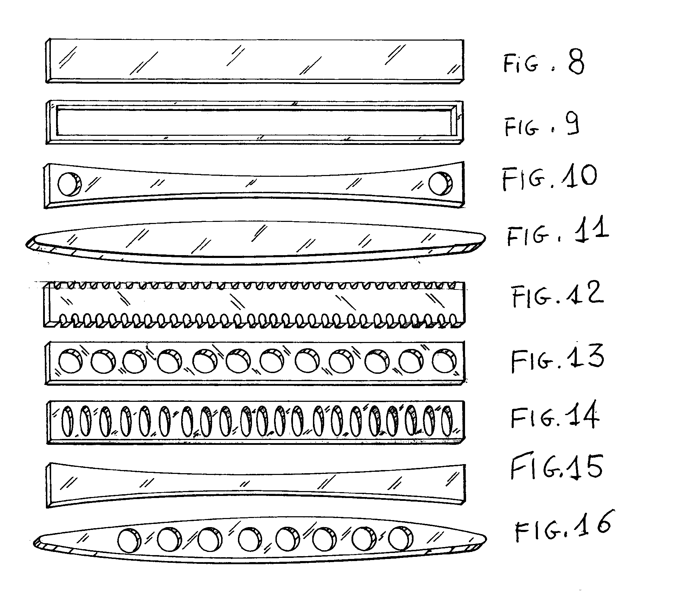

From the performed experiments, it has been found that a bar (1) in the shape of an elongate rectangular parallelepiped of the type shown in fig. 8 having average dimensions of 1 mm in thickness or height, 0.7mm in width and 5mm in length allows to obtain the desired results; of course, bar dimensions may vary based on the dimensions of interdental peaks' bone.

The bar (1) made out of biocompatible material may have, as mentioned, shapes different from the rectangular shape so as to fit at its best the shape and dimension of the interdental bone and interdental papillae.

Among the shapes of the bar (1) which are shown herein, the lenticular section, for example, allows for an insertion into narrow bone peaks, thus preserving a greater amount of interproximal bone.

Lenticular bars, however, are not claimed.

Within the bar (1), the surfaces may be perforated or hollow so as to allow the bone to grow both outside of and inside the bar to increase both the stability and the contact surface.

Also the bar edges can be smooth or undulated or serrated, and each conformation allows to make the bar particularly suitable to be implanted in specific situations; for example, a sharp serration allows for a deeper insertion and a greater primary stability thanks to the cutting action exerted by the bar's profile on the bone.

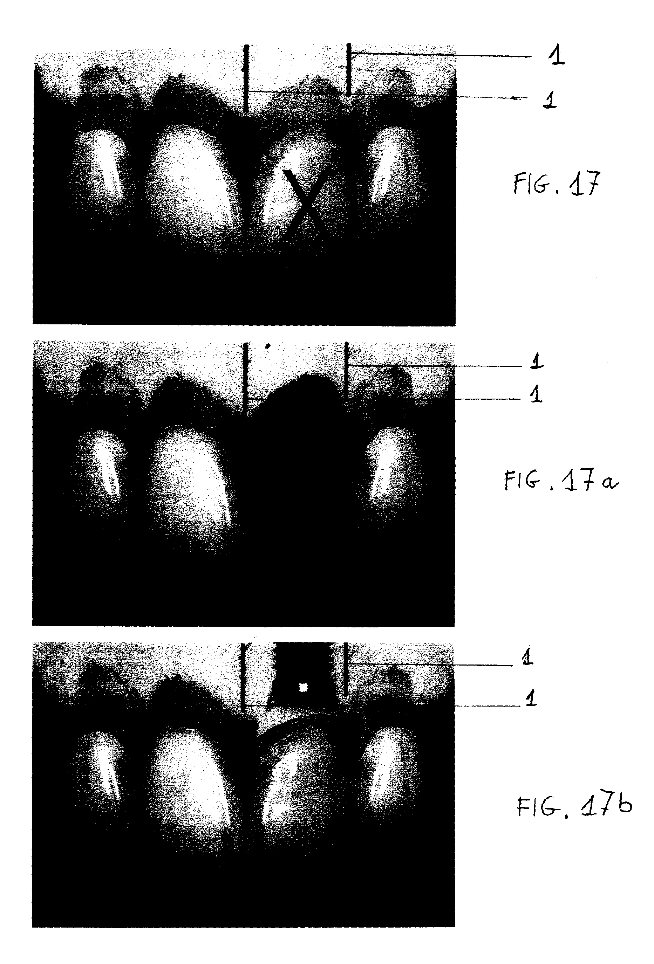

The insertion of biocompatible material bars (1) into the interdental bone, as schematically shown in figures 17, 17a and 17b as well as in plates 18 and 19, before or at the same time of performing dental procedures, comprises of the following steps:
- Incising and dissecting a full-thickness or envelope flap for denudation of interdental bone peaks;
- Developing an appropriate site, by means of an osteotomy bur for piezoelectric surgical unit which is calibrated with the same dimensions and shapes of the biocompatible material bar to be implanted or inserted, at the point of the interdental bone into which the biocompatible material bar has to be implanted;
- Checking the osteotomy dimension by means of a special caliper;
- Placing the biocompatible bar to be implanted;
- Deeply inserting the biocompatible material bar into the osteotomy site by means of a special instrument having an extremity made out of steel or titanium or Teflon or any other suitable material, and a hammer having a head made of steel or Teflon or any other suitable material;
- Covering the biocompatible material bars, and - if used - the filler material, with resorbable collagen membranes having a size and shape compatible with the performed osteotomy;
- Suturing the flap;
- Waiting the time necessary for the osseointegration of biocompatible material bars which will preserve the interdental bone peak's original height over time;
- Performing programmed dental procedures (dental extraction or other).

## Claims

1. Biocompatible material bar (1) apt to prevent the interdental bone peak resorption following dental procedures, **characterized in that** said bar has a thickness, length and width to allow a complete and total insertion of said biocompatible material bar into the interdental bone thickness wherein said bar has the shape of an elongated rectangular parallelepiped and wherein said biocompatible material is titanium or alloys thereof.

2. Biocompatible material bar according to claim 1, **characterized in that** said bar is 0,7 mm wide, 1mm thick or high and 5mm long.

3. Biocompatible material bar according to claim 1, **characterized in that** said bar has a solid body.

4. Biocompatible material bar according to claim 1, **characterized in that** said bar has a body with hollow areas.

5. Biocompatible material bar according to claim 1, **characterized in that** said bar is coated with hydroxyapatite.

6. Biocompatible material bar according to claim 1, **characterized in that** said bar has the outer surfaces treated with either acid etching, or plasma spraying, or sandblasting or machined.

## Patentansprüche

1. Stange (1) aus biokompatiblem Material, die geeignet ist, um die interdentale Knochenspitzenresorption nach zahnärztlichen Verfahren zu vermeiden, **dadurch gekennzeichnet, dass** die Stange eine
Dicke, Länge und Breite aufweist, um eine vollständige und ganze Einführung der Stange aus biokompatiblem Material in die interdentale Knochendicke zu gestatten, wobei die Stange
die Form eines länglichen rechteckigen Parallelepipeds aufweist und wobei das biokompatible Material Titan oder Legierungen davon ist.

2. Stange aus biokompatiblem Material nach Anspruch 1, **dadurch gekennzeichnet, dass** die Stange 0,7 mm breit, 1 mm dick oder hoch und 5 mm lang ist.

3. Stange aus biokompatiblem Material nach Anspruch 1, **dadurch gekennzeichnet, dass** die Stange einen massiven Körper aufweist.

4. Stange aus biokompatiblem Material nach Anspruch 1, **dadurch gekennzeichnet, dass** die Stange einen Körper mit hohlen Bereichen aufweist.

5. Stange aus biokompatiblem Material nach Anspruch 1, **dadurch gekennzeichnet, dass** die Stange mit Hydroxylapatit beschichtet ist.

6. Stange aus biokompatiblem Material nach Anspruch 1, **dadurch gekennzeichnet, dass** die Stange äußere Oberflächen aufweist, die mittels Säureätzen oder Plasmasprühen oder Sandstrahlen oder auf maschinelle Weise bearbeitet sind.

## Revendications

1. Barre de matériau biocompatible (1) apte à prévenir une résorption de pic osseux interdentaire suivant des procédures dentaires, **caractérisée en ce que** ladite barre a une épaisseur, une longueur, et une largeur permettant une insertion complète et totale de ladite barre de matériau biocompatible dans l'épaisseur osseuse interdentaire, dans laquelle ladite barre a la forme d'un parallélépipède rectangle allongé et dans laquelle ledit matériau biocompatible est le titane ou des alliages de celui-ci.

2. Barre de matériau biocompatible selon la revendication 1, **caractérisée en ce que** ladite barre mesure 0,7 mm de large, 1 mm d'épaisseur ou de hauteur et 5 mm de long.

3. Barre de matériau biocompatible selon la revendication 1, **caractérisée en ce que** ladite barre a un corps solide.

4. Barre de matériau biocompatible selon la revendication 1, **caractérisée en ce que** ladite barre a un corps doté de zones creuses.

5. Barre de matériau biocompatible selon la revendication 1, **caractérisée en ce que** ladite barre est revêtue d'hydroxyapatite.

6. Barre de matériau biocompatible selon la revendication 1, **caractérisée en ce que** ladite barre a les surfaces extérieures traitées par une gravure à l'acide, ou une pulvérisation par plasma ou un sablage ou un usinage.
